# EUROPÄISCHE PATENTSCHRIFT

(11) **EP 1 121 745 B1**
(45) Veröffentlichungstag und Bekanntmachung des Hinweises auf die Patenterteilung: **30.12.2009**
(21) Anmeldenummer: 99955827.3
(22) Anmeldetag: 01.10.1999
(51) Int. Cl.: H02K 11/02, B60S 1/08

(54) **ENTSTÖRSCHALTUNG**
NOISE SUPPRESSION CIRCUIT
CIRCUIT ANTIPARASITES

(30) Priorität: 05.10.1998 DE 19845862
(43) Veröffentlichungstag der Anmeldung: 08.08.2001
(73) Patentinhaber: ROBERT BOSCH GMBH, 70442 Stuttgart (DE)
(72) Erfinder: LAUK, Detlef, D-77871 Renchen (DE); HAERER, Michael, D-77830 Bühlertal (DE); WIEGERT, Andreas, D-77876 Kappelrodeck (DE)
(86) Internationale Anmeldenummer: PCT/DE1999/003158
(87) Internationale Veröffentlichungsnummer: WO 2000/021182

(56) Entgegenhaltungen:
- DE-A- 3 930 539
- DE-U- 29 619 780

## Beschreibung

### Stand der Technik

Die Erfindung geht aus von einer Entstörschaltung, insbesondere zum Entstören des Wischermotors eines Kraftfahrzeuges, wobei die Entstörschaltung mit zumindest zwei Kondensatoren, die zwischen einem gemeinsamen und zwei getrennten Anschlüssen liegen, und mit einer Impulsbegrenzung versehen ist, der im Oberbegriff des Anspruchs 1 definierten Gattung.

Aus dem deutschen Gebrauchsmuster 2 96 19 780.7 ist eine Entstörvorrichtung zum Entstören des Wischermotors eines Kraftfahrzeuges bekannt. Dabei enthält die Entstörschaltung zwei Kondensatoren, die zwischen einem gemeinsamen und zwei getrennten Anschlüssen liegen. Weiterhin ist zur Verbesserung der Entstörung eine Impulsbegrenzung vorgesehen, die durch einen Varistor parallel zu jedem Kondensator realisiert ist.

Ein Varistor ist ein relativ teures und Platz beanspruchendes Bauelement. Es ist bekannt, daß die Begrenzungsfunktion des Varistors gegenüber positiven und negativen Spannungsimpulsen ebenfalls durch eine antiserielle Beschaltung mit zwei Zenerdioden realisiert werden kann. Bauelemente dieser Art vereint in einem Gehäuse sind bekannt und werden als bidirektionale Zenerdioden angeboten. Durch vergleichsweise geringe Stückzahlen zu normalen, üblichen Bauelementen, wie z.B. Dioden und Zenerdionen, ist ihr Preis jedoch unverhältnismäßig hoch.

### Vorteile der Erfindung

Die erfindungsgemäße Entstörschaltung, insbesondere zum Entstören des Wischermotors eines Kraftfahrzeuges, mit den kennzeichnende Merkmalen des Anspruchs 1 hat demgegenüber den Vorteil, eine einfache und zuverlässige Lösung zur Verfügung zu stellen, bei welcher die Kosten gesenkt werden und ein geringerer Platzbedarf erreicht wird. Die Anzahl der Löt- oder Schweißstellen, allgemein der Verbindungsstellen ist gering, so daß sich neben dem Vorteil der Verwendung kostengünstiger Bauelemente wie Zenerdiode und Diode, auch noch der Vorteil einfacherer Fertigung hinzukommt. Dadurch, daß die Anzahl der Verbindungsstellen verringert ist, sind darüber hinaus auch die beim Löten oder Schweißen auftretenden Fehlerquellen wesentlich reduziert.

Bei der Entstörschaltung nach der Erfindung wird dazu prinzipiell zur Impulsbegrenzung jedem Kondensator die Reihenschaltung aus der Kathoden-Anoden-Strecke einer Diode und der Anoden-Kathoden-Strecke einer Zenerdiode parallel geschaltet. Bei Verwendung in einem Motor ist dabei das der negativen Anschlußklemme zugewandte Bauteil die Zenerdiode mit ihrer Kathode. Zur positiven Anschlußklemme hin wird die Sperrwirkung einer einfachen Diode ausgenutzt, wobei die Kathode der Diode am Anschluß liegt.

Durch die in den weiteren Ansprüchen niedergelegten Maßnahmen sind vorteilhafte Weiterbildungen und Verbesserungen der im Anspruch 1 angegebenen Entstörschaltung möglich.

Nach einer besonders zweckmäßigen Weiterbildung der Erfindung ist vorgesehen, daß die Anoden der Dioden und der Zenerdiode an einem Punkt zusammengeschaltet sind.

In bevorzugter vorteilhafter Ausgestaltung der erfindungsgemäßen Entstörschaltung ist bei Verwendung von zwei Kondensatoren eine einzige Zenerdiode für beide Parallelschaltungen vorgesehen. Damit ist eine sehr einfache und in der Praxis sehr kostengünstig und Platz sparend zu realisierende Version geschaffen.

In besonders vorteilhafter und zweckmäßiger Weiterbildung der Erfindung wird sie eingebaut als Entstörmodul in eine Entstörvorrichtung, welche in einem Kondensatorgehäuse vorgesehen ist. Entsprechend einer vorteilhaften Ausgestaltung dieser Weiterbildung der Erfindung weist das Kondensatorgehäuse drei Kontaktanschlüsse auf, die in einem festen räumlichen Verhältnis zueinander stehen, unabhängig von der Anzahl der Entstörbauelemente. In weiterer Ausgestaltung ist das Kondensatorgehäuse quader- oder würfelförmig gestaltet.

### Zeichnung

Die Erfindung ist anhand eines in der Zeichnung dargestellten Ausführungsbeispiels in der nachfolgenden Beschreibung näher erläutert. Die einzige Figur zeigt schematisch in einem Blockschaltbild den Aufbau der erfindungsgemäßen Entstörschaltung gemäß der Erfindung.

### Beschreibung des Ausführungsbeispiels

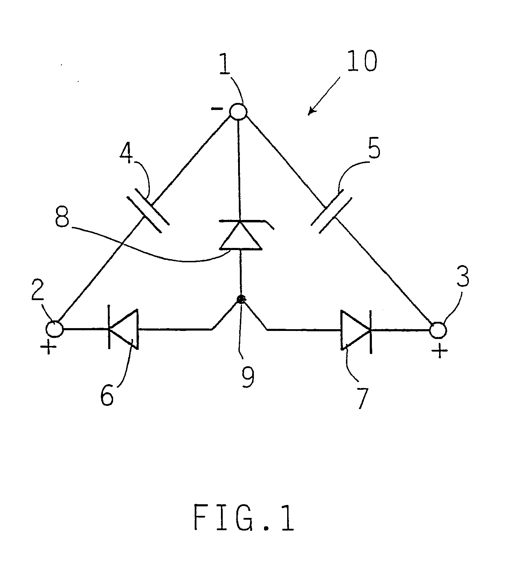

In Fig. 1 ist schematisch der Aufbau der erfindungsgemäßen Entstörschaltung gemäß der Erfindung dargestellt. Das mit 10 bezeichnete Entstörmodul weist drei Anschlüsse 1, 2 und 3 auf. Am Abschluß 1 liegt beispielsweise negatives Potential und an den Anschlüssen 2 und 3 positives Potential an. Zwischen den Anschlüssen 1 und 2 sowie 1 und 3 ist jeweils ein Kondensator 4 beziehungsweise 5 angeordnet. Erfindungsgemäß ist zur Impulsbegrenzung parallel zu jedem Kondensator 4 beziehungsweise 5 die Reihenschaltung aus der Kathoden-Anoden-Strecke einer Diode 6 beziehungsweise 7 und der Anoden-Kathoden-Strecke einer Zenerdiode 8 parallel geschaltet. Die Anoden der Dioden 6 und 7 und der Zenerdiode 8 sind an einem Punkt 9 zusammengeschaltet.

Im dargestellten Beispiel ist nur eine einzige Zenerdiode 8 vorgesehen. Dies erspart eine separate Zenerdiode. Es ist jedoch möglich und in manchen Fällen notwendig oder vorteilhaft, jeweils eine vollständige Reihenschaltung aus den zwei Bauelementen Diode und Zenerdiode einem Kondensator parallel zu schalten. Es ist dabei dann von Vorteil, aber nicht unbedingt nötig, die Anoden der Dioden und Zenerdioden an einem Punkt zusammen zu schalten. Es ist auch möglich einen separaten Kondensator zwischen die beiden Anschlüsse 2 und 3 einzufügen, um gegebenenfalls die Entstörwirkung zu erhöhen. Dies ist nicht in der Figur 1 dargestellt.

Entsprechend einer besonders vorteilhaften und zweckmäßigen Weiterbildung der Erfindung wird sie als Entstörmodul in eine Entstörvorrichtung eingebaut, welche in einem Kondensatorgehäuse vorgesehen ist. In vorteilhafter Ausgestaltung dieser Weiterbildung der Erfindung weist das Kondensatorgehäuse drei Kontaktanschlüsse auf, die in einem festen räumlichen Verhältnis zueinander stehen, unabhängig von der Anzahl der Entstörbauelemente. Das Kondensatorgehäuse ist vorzugsweise quader- oder würfelförmig gestaltet.

Diese nicht in der Figur dargestellte Ausgestaltung und Verwendung der erfindungsgemäßen Entstörschaltung beinhaltet weitere fertigungstechnische Vereinfachungen und Einsparungen.

## Patentansprüche

1. Entstörschaltung, insbesondere zum Entstören des Wischermotors eines Kraftfahrzeuges, wobei die Entstörschaltung mit zumindest zwei Kondensatoren (4, 5), die zwischen einem gemeinsamen (1) und zwei getrennten Anschlüssen (2, 3) liegen, und mit einer Impulsbegrenzung versehen ist,
**dadurch gekennzeichnet, daß**
zur Impulsbegrenzung jedem Kondensator (4, 5) die Reihenschaltung aus der Kathoden-Anoden-Strecke einer Diode (6, 7) und der Anoden-Kathoden-Strecke einer Zenerdiode (8) parallel geschaltet ist.

2. Entstörschaltung nach Anspruch 1, **dadurch gekennzeichnet, daß** die Anoden der Dioden (6, 7) und der Zenerdiode (8) an einem Punkt (9) zusammengeschaltet sind.

3. Entstörschaltung nach einem der vorigen Ansprüche, **dadurch gekennzeichnet, daß** bei Verwendung von zwei Kondensatoren (4, 5) eine einzige Zenerdiode (8) für beide Parallelschaltungen vorgesehen ist.

4. Entstörschaltung nach einem der vorigen Ansprüche, **dadurch gekennzeichnet, daß** sie eingebaut ist als Entstörmodul (10) in eine Entstörvorrichtung, welche in einem Kondensatorgehäuse vorgesehen ist.

5. Entstörschaltung nach Anspruch 4, **dadurch gekennzeichnet, daß** das Kondensatorgehäuse drei Kontaktanschlüsse aufweist, die in einem festen räumlichen Verhältnis zueinander stehen, unabhängig von der Anzahl der Entstörbauelemente.

6. Entstörschaltung nach einem der Ansprüche 4 oder 5, **dadurch gekennzeichnet, daß** das Kondensatorgehäuse quader- oder würfelförmig ist.

## Claims

1. Interference-suppression circuit, in particular for interference suppression in the wiper motor of a motor vehicle, with the interference-suppression circuit being provided with at least two capacitors (4, 5) which are situated between a common connection (1) and two separate connections (2, 3), and with a pulse-limiting means,
**characterized in that**
the series circuit comprising the cathode-anode section of a diode (6, 7) and the anode-cathode section of a Zener diode (8) is connected in parallel with each capacitor (4, 5) for pulse limiting.

2. Interference-suppression circuit according to Claim 1, **characterized in that** the anodes of the diodes (6, 7) and of the Zener diode (8) are connected at one point (9).

3. Interference-suppression circuit according to either of the preceding claims, **characterized in that**, when two capacitors (4, 5) are used, a single Zener diode (8) is provided for both parallel circuits.

4. Interference-suppression circuit according to one of the preceding claims, **characterized in that** it is fitted, as an interference-suppression module (10), in an interference-suppression apparatus which is provided in a capacitor housing.

5. Interference-suppression circuit according to Claim 4, **characterized in that** the capacitor housing has three contact connections which have a fixed spatial relationship to one another, irrespective of the number of interference-suppression components.

6. Interference-suppression circuit according to either of Claims 4 and 5, **characterized in that** the capacitor housing is of cuboid or cubic form.

## Revendications

1. Circuit d'antiparasitage, notamment pour antiparasiter le moteur d'essuie-glace d'un véhicule automobile, le circuit d'antiparasitage étant muni d'au moins deux condensateurs (4, 5) qui se trouvent entre une borne commune (1) et deux bornes séparées (2, 3) et d'un limiteur d'impulsion, **caractérisé en ce que** pour la limitation des impulsions, un circuit série composé de la branche cathode-anode d'une diode (6, 7) et de la branche anode-cathode d'une diode zener (8) est branché en parallèle avec chaque condensateur (4, 5).

2. Circuit d'antiparasitage selon la revendication 1, **caractérisé en ce que** les anodes des diodes (6, 7) et de la diode zener (8) sont interconnectées en un point (9).

3. Circuit d'antiparasitage selon l'une des revendications précédentes, **caractérisé en ce qu'**en cas d'utilisation de deux condensateurs (4, 5), une seule diode zener (8) est prévue pour les deux circuits parallèles.

4. Circuit d'antiparasitage selon l'une des revendications précédentes, **caractérisé en ce qu'**il est intégré en tant que module d'antiparasitage (10) dans un dispositif d'antiparasitage qui est prévu dans un boîtier de condensateur.

5. Circuit d'antiparasitage selon la revendication 4, **caractérisé en ce que** le boîtier de condensateur présente trois bornes de contact qui sont disposées selon un rapport spatial fixe entre elles indépendamment du nombre de composants d'antiparasitage.

6. Circuit d'antiparasitage selon la revendication 4 ou 5, **caractérisé en ce que** le boîtier de condensateur est de forme parallélépipédique ou cubique.
